(19) Europäisches Patentamt / European Patent Office / Office européen des brevets

(11) **EP 3 053 220 B1**

(12) **EUROPEAN PATENT SPECIFICATION**

(45) Date of publication and mention
of the grant of the patent:
**19.01.2022 Bulletin 2022/03**

(51) International Patent Classification (IPC):
**H01Q 9/42** *(2006.01)* **H01Q 9/04** *(2006.01)*
**H01Q 1/24** *(2006.01)*

(21) Application number: **14849847.0**

(52) Cooperative Patent Classification (CPC):
**H01Q 1/243; H01Q 9/0421; H01Q 9/42**

(22) Date of filing: **26.09.2014**

(86) International application number:
**PCT/KR2014/008998**

(87) International publication number:
**WO 2015/046937 (02.04.2015 Gazette 2015/13)**

(54) **ELECTRONIC DEVICE WITH PIFA TYPE ANTENNA AND WIRELESS SIGNAL TRANSMITTING/RECEIVING DEVICE THEREOF**

ELEKTRONISCHE VORRICHTUNG MIT ANTENNE VOM PIFA-TYP UND DRAHTLOSE SIGNALSENDE-/-EMPFANGSVORRICHTUNG DAFÜR

DISPOSITIF ÉLECTRONIQUE AYANT UNE ANTENNE DE TYPE PIFA ET SON DISPOSITIF DE TRANSMISSION/RÉCEPTION DE SIGNAL SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.09.2013 KR 20130116971**
**14.10.2013 KR 20130122254**

(43) Date of publication of application:
**10.08.2016 Bulletin 2016/32**

(73) Proprietor: **Samsung Electronics Co., Ltd.**
**Suwon-si, Gyeonggi-do 443-742 (KR)**

(72) Inventor: **SUH, Younghoon**
**Yongin-si**
**Gyeonggi-do 446-717 (KR)**

(74) Representative: **HGF**
**HGF Limited**
**1 City Walk**
**Leeds LS11 9DX (GB)**

(56) References cited:
**KR-A- 20020 042 731 KR-A- 20040 083 475**
**KR-A- 20070 098 020 KR-A- 20080 058 736**
**KR-A- 20080 058 736 US-A1- 2012 229 346**
**US-A1- 2013 234 897 US-B1- 6 255 994**

• **WONG K-L ET AL: "DIVERSITY DUAL-BAND PLANAR INVERTED-F ANTENNA FOR WLAN OPERATION", MICROWAVE AND OPTICAL TECHNOLOGY LETTERS, JOHN WILEY & SONS, INC, US, vol. 38, no. 3, 5 August 2003 (2003-08-05) , pages 223-225, XP009018285, ISSN: 0895-2477, DOI: 10.1002/MOP.11020**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

## Description

### Technical Field

Various exemplary embodiments of the present disclosure relate to an electronic device with a Planar Inverted-F Antenna (PIFA) type antenna and a wireless signal transmitting/receiving device thereof.

### Background Art

Recently, remarkable development of information communication technology, semiconductor technology and the like have rapidly increased distribution and use of electronic devices. In addition, recent electronic devices are a convergence of various types of terminals rather than being strictly for one type of use. For example, a mobile communication terminal provides various functions, such as a function for TV watching (e.g., mobile broadcasting such as a Digital Multimedia Broadcasting (DMB) or Digital Video Broadcasting (DVB), a music reproducing function (e.g., MPEG Audio Layer-3 (MP3), a still image or moving image photographing function, an Internet connection function, and a radio receiving function, in addition to an ordinary communication function such as a voice communication function or a message transmitting/receiving function.

US2013/234897A1 concerns a mobile terminal apparatus and method for performing wireless communication, including a main antenna to transmit or receive signals at one or more first frequency bands, a sub antenna to transmit or receive signals at least at one second frequency band, and a feeding pad connected to the main antenna to directly supply power or signals to the main antenna to transmit or receive signals at the one or more first frequency bands, the feeding pad being spaced apart from or disposed within a reference proximity to and electrically coupled to the sub antenna to indirectly supply power or signals to the sub antenna to transmit or receive signals in the at least one second frequency band.

KR20080058736 A concerns a mobile terminal and its antenna provided to transmit/receive a multi-band signal by having a wide bandwidth and a high antenna gain by performing impedance matching on a short-circuit signal of a radiation unit. A feeder feeds a signal to a radiation unit. The first matching unit performs impedance matching between the feeder and a signal transmission/reception end of a main circuit board of a main body that transmits/receives a signal to/from the feeder. The second matching unit is formed as a matching element between the radiation unit and ground surface of the main circuit board of the main body. The matching element is at least one of a coil and a capacitor. The second matching unit is formed as the coil and the capacitor is connected in series or in parallel. The second matching unit operates as a short-circuit unit of a PIFA (Planar Inverted F-type Antenna).

US6255994B1 concerns an inverted-F antenna, which is capable of coping with the change of available frequency bands while keeping its compactness. This antenna is comprised of a radiating element for radiating or receiving an RF signal, a ground conductor arranged to be opposite to the radiating element with a specific gap, a feeding terminal electrically connected to the radiating element, a first grounding terminal electrically connected to the radiating element, at least one impedance element provided in a line connecting the first grounding terminal to the ground conductor, and a first switch for selectively inserting the at least one impedance element into the line. A resonant frequency of the antenna is changed by operating the first switch.

US2012229346A1 concerns a handheld device comprising a housing, a circuit board, a planar antenna and a switch. The housing comprising an outer surface is configured to define a receiving space. The circuit board is disposed in the receiving space. The planar antenna comprises a metal layer, wherein the metal layer comprising a first connecting point and a second connecting point is patterned on the outer surface. The switch comprising a first electrode and a second electrode is configured to control the electrical connection between the first connecting point and the second connecting point, wherein the first electrode and the second electrode are electrically connected between the first connecting point and the second connecting point. The planar antenna operates at a first central band when the switch is turned on, and operates at a second central band when the switch is turned off.

An article entitled "DIVERSITY DUAL-BAND PLANAR INVERTED-F ANTENNA FOR WLAN OPERATION" by Kin-Lu Wong et al, published by MICROWAVE AND OPTICAL TEHCNGOLGY LETTERS, Vol. 38, No. 3, August 2003, concerns a diversity dual-band antenna consisting of two back-to-back stacked PIFAs, and a constructed prototype suitable to be mounted vertically at the edge of a PCMCIA network card.

### Disclosure of Invention

### Technical Problem

Meanwhile, the electronic devices include an antenna for a wireless communication function. The electronic devices generally use a PIFA type antenna. The PIFA type antenna has a problem in that it is difficult to secure a radiation efficiency and a radiation performance when an effective volume is small. Conventionally, the PIFA type antenna has been manufactured to have a large size in order to increase the effective volume of the antenna.

Recent slimmed electronic devices suffer from a difficulty in securing a space for mounting an antenna. For example, the recent electronic devices have a problem in that it is difficult to secure an effective volume for an antenna.

**Solution to Problem**

Various exemplary embodiments of the present disclosure have been made in an effort to solve the above-described problems in the related art and is capable of providing an electronic device with a PIFA type antenna and a wireless signal transmitting/receiving device thereof which are capable of securing a radiation performance of the electronic device without increasing an effective volume of the PIFA type antenna.

In order to solve the problems or inconveniences as described above, there is provided an electronic device according to claim 1.

**Advantageous Effects of Invention**

As described above, according to the exemplary embodiments of the present disclosure, an electronic device with a PIFA type antenna and a wireless signal transmitting/receiving device thereof are capable of improving a radiation efficiency and performance of the electronic device without increasing an effective volume of the PIFA type antenna.

**Brief Description of Drawings**

The objects, features and advantages of the present disclosure will become more apparent to a person of ordinary skill in the art from the following detailed description in conjunction with the accompanying drawings, in which:

FIG. 1 is a block diagram illustrating an electronic device according to an exemplary embodiment of the present disclosure;

FIG. 2 is a block diagram illustrating an electronic device with a PIFA type antenna according to another exemplary embodiment of the present disclosure;

FIG. 3 is a view illustrating a PIFA type antenna according to an exemplary embodiment of the present disclosure and a printed circuit board on which the PIFA type antenna is mounted (embodiment not covered by the appended claims);

FIG. 4 is a view illustrating a PIFA type antenna according to another exemplary embodiment of the present disclosure and a printed circuit board on which the PIFA type antenna is mounted (embodiment not covered by the appended claims);

FIG. 5 is a view illustrating a PIFA type antenna according to still another exemplary embodiment of the present disclosure, a printed circuit board on which the PIFA type antenna is mounted, and a case;

FIG. 6 is a view illustrating a PIFA type antenna according to yet another exemplary embodiment of the present disclosure, a printed circuit board on which the PIFA type antenna is mounted, and a case (embodiment not covered by the appended claims); and

FIG. 7 is a graph representing measured radiation performances of a conventional electronic device and an electronic device according to an exemplary embodiment of the present disclosure.

**Mode for the Invention**

Hereinafter, various exemplary embodiments will be described in detail with reference to the accompanying drawings. It should be noted that the same elements will be designated by the same reference numerals although they are shown in different drawings. Further, detailed descriptions related to well-known functions or configurations capable of making subject matters of the present invention unnecessarily obscure will be omitted. In the following description, it should be noted that only portions required for comprehension of operations according to the embodiments of the present invention will be described and descriptions of other portions will be omitted not to make subject matters of the present invention obscure. Also, in the accompanying drawings, some elements are exaggerated, omitted, or schematically illustrated, and the size of each element does not entirely reflect an actual size.

Meanwhile, the various exemplary embodiments of the present invention disclosed in the present specification and the drawings have been presented to easily explain contents of the present invention and help comprehension of the present invention, and do not limit the scope of the present invention.

Before providing a detailed description, it is premised that an electronic device according to an exemplary embodiment of the present disclosure to be described later may be any of various electronic devices with a PIFA type antenna such as a mobile communication device, a Personal Digital Assistants (PDA), a smart phone, a tablet Personal Computer (PC), and a Portable Multimedia Player (PMP).

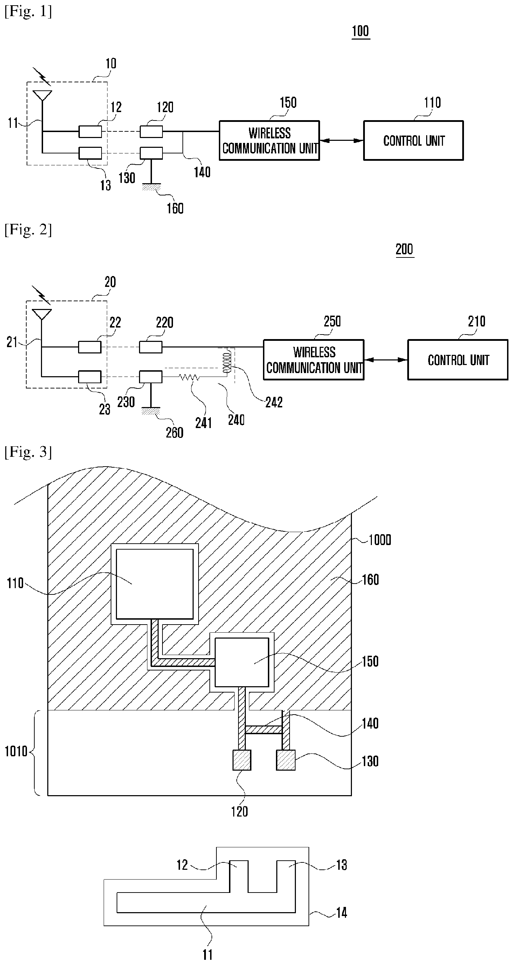

FIG. 1 is a block diagram illustrating an electronic device according to an exemplary embodiment of the present disclosure.

Referring to FIG. 1, an electronic device 100 according to an exemplary embodiment of the present disclosure may include a PIFA type antenna 10, a control unit 110, a power feeding pad 120, a ground pad 130, a connection section 140, a wireless communication unit 150, and a ground area 160.

The PIFA type antenna 10 may include a radiation section 11, a power feeding section 12, and a ground section 13.

The radiation section 11 may transmit/receive a wireless signal having a designed frequency. For example, the radiation section 11 may radiate a wireless signal transmitted from the wireless communication unit 150 through the power feeding pad 120 and the power feeding section 12, to the outside, or receive a wireless signal and transmit the received wireless signal to the wireless communication unit 150 through the power feeding section 12 and the power feeding pad 120.

The power feeding section 12 comes into contact with the power feeding pad 120 when the PIFA type antenna 10 is equipped (mounted and fastened) in the electronic device 100. The power feeding section 12 may send a signal received from the power feeding pad 120 to the radiation section 11, or send a signal received from the radiation section 11 to the wireless communication unit 150 through the power feeding pad 120.

The ground section 13 comes into contact with the ground pad 130 when the PIFA type antenna 10 is equipped (mounted and fastened) in the electronic device 100.

The power feeding pad 120 may be positioned between the power feeding section 12 and the wireless communication unit 150. The power feeding pad 120 is electrically connected with the wireless communication unit 150 (e.g., a signal transmitting/receiving terminal) and the ground pad 130. In addition, the power feeding pad 120 is connected with the power feeding section 12 of the antenna 10 when the antenna 10 is equipped in the electronic device 100.

The ground pad 130 is connected with the ground section 13 of the antenna 10 when the antenna 10 is equipped in the electronic device 100. The ground pad 130 is electrically connected with the ground area 160. In addition, the ground pad 130 is electrically connected with the power feeding pad 120 through the connection section 140.

The connection section 140 forms an electric route between the power feeding pad 120 and the ground pad 130. For example, the connection section 140 may electrically connect the power feeding pad 120 to at least one of the ground pad 130 and the ground area 160.

The ground area 160 may serves as a ground of the electronic device 100. For example, the ground area 160 may serves as a reference voltage point in the electronic device 100. The ground area 160 may be formed by a conductive (e.g., metal) layer on a Printed Circuit Board (PCB).

The wireless communication unit 150 may support a wireless communication function of the electronic device 100. The wireless communication unit 150 may include, for example, a mobile communication module that supports a mobile communication (e.g., 3G or 4G standard mobile communication) function and a short range wireless communication module that supports a short range wireless communication function.

The control unit 110 may control overall operations of the electronic device 100 and a signal flow between internal blocks of the electronic device 100, and perform a data processing function that processes data. For example, the control unit 110 may be formed by, for example, a Central Processing Unit (CPU), and an Application Processor (AP). The control unit 110 may be formed by a single core processor or a multi-core processor.

Meanwhile, the electronic device 100 may further include a first elastic member (not illustrated) so as to ensure stable contact between the power feeding section 12 and the power feeding pad 120 and a second elastic member (not illustrated) so as to ensure stable contact between the ground section 13 and the ground pad 130. The first elastic member (not illustrated) and the second elastic member (not illustrated) may be a C-clip.

In addition, although the ground pad 130 and the ground area 160 are directly connected with each other in the illustrated electronic device 100, an exemplary embodiment of the present disclosure is not limited thereto. For example, a matching unit may be interposed between the ground pad 130 and the ground area 160. The matching unit may be configured by one or more lumped elements which are connected in serial and/or parallel. The lumped elements may be, for example, a resistor, an inductor, and a capacitor.

When a plurality of matching units are provided, the electronic device 100 may further include a switching unit which performs switching such that any one of the plurality of matching units is connected with the ground pad 130 and the ground area 160 under the control of the control unit 110. Similarly, the electronic device 100 may further include a matching unit (not illustrated) between the power feeding section 120 and the wireless communication unit 150.

In addition, the electronic device 100 may selectively further include components having additional functions such as a broadcasting receiving module for receiving broadcasting, a sensor module including a plurality of sensors (e.g., a motion sensor, an illuminance sensor, an acceleration sensor, and a geomagnetic sensor), a camera module that supports a still image or moving image photographing function, a digital music reproducing module such as an MP3 module, and a voice recognition module that supports a voice recognition function. It is difficult to enumerate all such components since they may be variously modified according to a tendency of convergence of digital devices. However, the electronic device 100 according to the present exemplary embodiment may further include any components equivalent to the above-mentioned components.

FIG. 2 is a block diagram illustrating an electronic device with a PIFA type antenna according to another exemplary embodiment of the present disclosure.

Referring to FIG. 2, an electronic device 200 according to another exemplary embodiment of the present disclosure may include a PIFA type antenna 20, a control unit 210, a power feeding pad 220, a ground pad 230, a connection section 240, a wireless communication unit 250, and a ground area 260. The PIFA type antenna 20 may include a radiation section 21, a power feeding section 22, and a ground section 23.

The electronic device 200 according to the present exemplary embodiment is different from the electronic device 100 illustrated in FIG. 1 only in the configuration of the connection sections 140 and 240. Thus, descriptions for the other same components will be omitted.

The connection section 240 may include one or more lumped elements. The one or more lumped elements may be connected in serial and/or parallel. For example, the connection section 240 may include a resistor 241 and an inductor 242 which are connected with each other in serial. The kinds, values and circuit structure of the lumped elements may be optimized through a test.

FIG. 3 is a view illustrating a PIFA type antenna according to an exemplary embodiment of the present disclosure, not covered by the appended claims, and a printed circuit board on which the PIFA type antenna is mounted.

Referring to FIG. 3, a printed circuit board 1000 of the electronic device 100 of the present exemplary embodiment may be mounted with one or more electronic elements. For example, a control unit 110, a power feeding pad 120, a ground pad 130, a connection section 140, and a wireless communication unit 150 may be mounted on the printed circuit board 1000. In addition, the printed circuit board 1000 may further include wiring to electrically connect the electronic elements, and a ground area 160.

According to an exemplary embodiment of the present disclosure, the connection section 140 may be formed by a conductive(e.g. metal) line, and may connect a first route (or wiring) that connects the power feeding pad 120 and the wireless communication unit 150 and a second route (or wiring) that connects the ground pad 130 and the ground area 150. For example, a length, a width, a position, and a shape of the connection section 140 may be variously changed so as to optimize the radiation performance of the PIFA type antenna 10.

Meanwhile, FIG. 3 illustrates that the connection section 140 connects the first route (or wiring) which connects the power feeding pad 120 and the wireless communication unit 150 and the second route (or wiring) which connects the ground pad 130 and the ground area 150. However, the connection section 140 may connect the first route to the ground area 160 without connecting with the second route. In addition, the connection section 140 may connect the first route to both the second route and the ground area 160.

The power feeding pad 120, the ground pad 130, and the connection section 140 may be formed in a fill-cut region 1010 of the printed circuit board 1000 which is formed by completely removing a conductive (e.g. metal) layer.

The antenna 10 may be mounted on a carrier 14. The shape of the antenna 10 illustrated in FIG. 3 is merely an example and the present disclosure is not limited thereto. For example, the length, the width and the shape of the radiation section 11 may be variously formed. In addition, the positions of the power feeding section 12 and the ground section 13 may be changed. In other words, the power feeding section 12 may be positioned at the right side and the ground section 13 may be positioned at the left side, unlike FIG. 3.

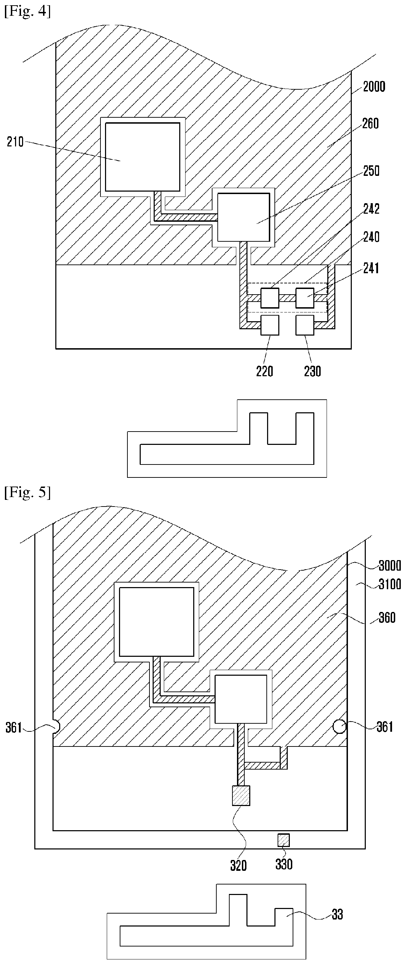

FIG. 4 is a view illustrating a PIFA type antenna according to another exemplary embodiment of the present disclosure, not covered by the appended claims, and a printed circuit board on which the PIFA type antenna is mounted.

Referring to FIG. 4, a printed circuit board 2000 of an electronic device 200 according to another exemplary embodiment of the present disclosure may be mounted with a control unit 210, a power feeding pad 220, a ground pad 230, a connection section 240, and a wireless communication unit 250. In addition, the printed circuit board 2000 may include wiring to electrically connect electronic elements, and a ground area 260.

The connection section 240 of the electronic device 200 according to another exemplary embodiment of the present disclosure may include one or more lumped elements. For example, FIG. 4 illustrates two lumped elements 241 and 242 are connected in serial. This is merely an example and exemplary embodiments of the present disclosure are not limited thereto as described above. Meanwhile, in order to avoid overlapped descriptions with FIG. 3, descriptions on other components will be omitted.

FIG. 5 is a view illustrating a PIFA type antenna according to still another exemplary embodiment of the present disclosure, a printed circuit board on which the PIFA type antenna is mounted, and a case.

Referring to FIG. 5, an electronic device according to still another exemplary embodiment includes a ground pad 330 which is provided on a case (3100) of the electronic device (e.g., a front case or a rear case) rather than a printed circuit board 3000.

When a case 3100 includes a ground pad 330, the case 3100 (hereinafter, referred to as a "conductive area") is formed of a conductive material (e.g. metal). The conductive area may be formed by painting, coating or depositing (evaporating) a conductive material on the case 3100.

The conductive area of the case 3100 may be electrically connected with a ground area 360 of the printed circuit board 3000 through at least one hole 361. A screw may be fastened to the at least one hole 361. When the ground pad 330 is positioned in the conductive area of the case 3100 as described above, the ground section 33 may be connected with the ground area 360 through the ground pad 330 and the conductive area of the case 3100.

In the foregoing, although an example, in which the ground pad 330 is mounted on the case 3100, has been described, exemplary embodiments of the present disclosure, not covered by the appended claims, are not limited thereto. For example, a power feeding pad 320 may positioned on the case 3100. Meanwhile, in order to avoid overlapped descriptions, descriptions on the other components will be omitted.

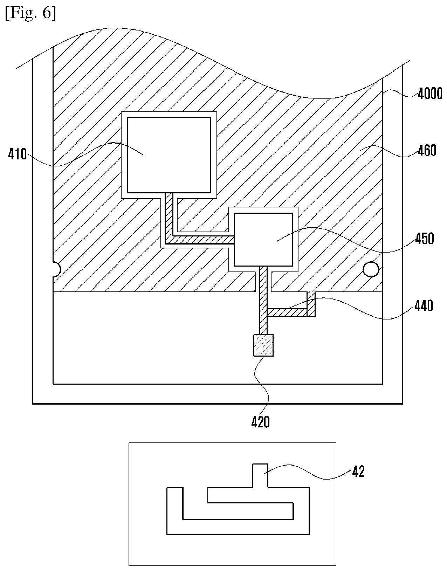

FIG. 6 is a view illustrating a PIFA type antenna according to yet another exemplary embodiment of the present disclosure, not covered by the appended claims, a printed circuit board on which the PIFA type antenna is mounted, and a case.

Referring to FIG. 6 a control unit 410, a power feeding pad 420, a connection section 440, and a wireless communication unit 450 may be mounted on a printed circuit board 4000 of an electronic device according to yet another of the present disclosure. In addition, the printed circuit board 4000 may include wiring to electrically connect electronic elements, and a ground area 460. Thus, the printed circuit board of yet another exemplary embodiment of the present disclosure does not include a ground pad.

According to yet another exemplary embodiment of the present disclosure, a PIFA type antenna may formed by a single pad 42 (hereinafter, referred to as an "integrated pad") unlike the PIFA type antennas of FIGS. 3 and 4. The integrated pad 42 of the PIFA type antenna may be come in contact with the power feeding pad 420 of the printed circuit board 4000 when the PIFA type antenna is equipped in the electronic device. In addition, although FIG. 6 illustrates the connection section 440 as being formed by a conductive line, the connection section 440 may include one or more lumped elements which are connected in serial and/or parallel as illustrated in FIG. 4. Meanwhile, in order to avoid overlapped descriptions, descriptions on other components will be omitted.

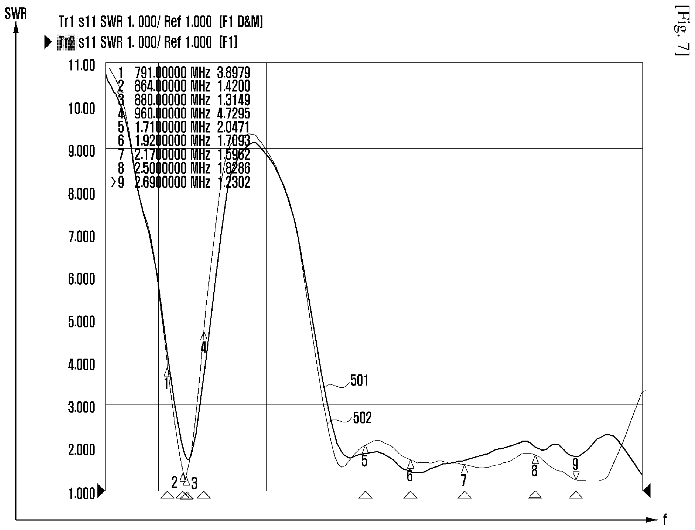

FIG. 7 is a graph representing measured radiation performances of a conventional electronic device and an electronic device according to an exemplary embodiment of the present disclosure.

Referring to FIG. 7, the first graph 501 is a radiation performance graph of a conventional electronic device, and the second graph 502 is a radiation performance graph of an electronic device according to an exemplary embodiment. Meanwhile, the second graph 502 of FIG. 7 and measured results of Table 2 below were obtained by performing a measurement using the electronic device illustrated in FIG. 6.

The radiation performances of the conventional electronic device and the electronic device according to the exemplary embodiment of the present disclosure were measured using a Standing Wave Ratio (SWR). Here, the SWR refers to an indicator indicating a degree of reflection of energy input to or output from a circuit or a system, and may be represented by a ratio of a minimum value and a maximum value of a standing wave at an input stage or an output stage as in Equation 1 below. Here, the standing wave refers to a stationary wave generated when a progress wave is combined with a wave reflected with reference to a boundary surface.

(Equation 1)

$$SWR = (1 + \text{reflection coefficient}) / (1 - \text{reflection coefficient})$$

Referring to Equation 1, there is no reflection at an input or output stage, the SWR becomes 1 which is the best value, and when the reflection is very high, the SWR may become infinite. That is, Equation 1 means that the radiation performance is better when the SWR is nearer to 1.

Meanwhile, upon comparing the first graph 1 501 and the second graph 502 of FIG. 7, it can be seen that the SWR of the electronic device of the exemplary embodiment of the present disclosure is better than that of the conventional electronic device in a band of about 830 MHz to 900 MHz and a band of about 2,100 MHz to 2,800 MHz.

In addition, Table 1 below represents a radiation efficiency of the conventional electronic device, and Table 2 illustrates a radiation efficiency of the electronic device of the exemplary embodiment of the present disclosure.

Table 1

[Table 1]

| | 1 | 2 | 3 | 4 | 5 | 6 | 7 | 8 | 9 |
|---|---|---|---|---|---|---|---|---|---|
| Frequency [MHz] | 791 | 821 | 832 | 862 | 880 | 915 | 925 | 960 | 1710 |
| Efficiency [dB] | -11.34 | -9.43 | -8.99 | -7.88 | -7.60 | -7.17 | -7.09 | -7.85 | -3.82 |
| Efficiency [%] | 7.35 | 11.39 | 12.63 | 16.28 | 17.38 | 19.17 | 19.54 | 16.42 | 41.48 |
| TRG [dB] | -11.34 | -9.43 | -8.99 | -7.88 | -7.60 | -7.17 | -7.09 | -7.85 | -3.82 |
| 10 | 11 | 12 | 13 | 14 | 15 | 16 | 17 | 18 | 19 | 20 |
| 1785 | 1805 | 1880 | 1920 | 1980 | 2110 | 2170 | 2500 | 2570 | 2620 | 2690 |
| -2.85 | -2.57 | -2.47 | -3.00 | -1.91 | -3.22 | -2.39 | -7.02 | -6.89 | -7.97 | -8.92 |
| 51.88 | 55.37 | 56.62 | 50.10 | 64.41 | 47.64 | 57.67 | 19.84 | 20.49 | 15.94 | 12.83 |
| -2.85 | -2.57 | -2.47 | -3.00 | -1.91 | -3.22 | -2.39 | -7.02 | -6.89 | -7.97 | -8.92 |

Table 2

[Table 2]

| | 1 | 2 | 3 | 4 | 5 | 6 | 7 | 8 | 9 |
|---|---|---|---|---|---|---|---|---|---|
| Frequency [MHz] | 791 | 821 | 832 | 862 | 880 | 915 | 925 | 960 | 1710 |
| Efficiency [dB] | -11.59 | -9.44 | -8.88 | **-7.61** | **-7.34** | -7.31 | -7.47 | -9.05 | -3.92 |
| Efficiency [%] | 6.93 | 11.37 | 12.94 | 17.34 | 18.44 | 18.58 | 17.90 | 12.43 | 40.52 |
| TRG [dB] | -11.59 | -9.44 | -8.88 | -7.61 | -7.34 | -7.31 | -7.47 | -9.05 | -3.92 |
| 10 | 11 | 12 | 13 | 14 | 15 | 16 | 17 | 18 | 19 | 20 |
| 1785 | 1805 | 1880 | 1920 | 1980 | 2110 | 2170 | 2500 | 2570 | 2620 | 2690 |
| -3.13 | -2.81 | -2.80 | -3.49 | -2.19 | -3.31 | -2.22 | **-4.43** | **-6.38** | **-7.37** | **-7.23** |
| 48.67 | 52.34 | 52.45 | 44.72 | 60.42 | 46.68 | 59.96 | 36.04 | 23.03 | 18.31 | 18.90 |
| -3.13 | -2.81 | -2.80 | -3.49 | -2.19 | -3.31 | -2.22 | -4.43 | -6.38 | -7.37 | -7.23 |

Upon comparing Table 1 and Table 2, it can be found that the radiation efficiency of the electronic device is improved at 862 MHz, 880 MHz, 2500 MHZ, 2570 MHz, 2620 MHz, and 2690 MHz.

As described in detail above, various exemplary embodiments of the present disclosure are capable of improving a radiation performance and efficiency of an PIFA type antenna without increasing an effective volume of the antenna. As a result, the various exemplary embodiments of the present disclosure may easily secure a radiation performance and efficiency in a slimmed electronic device.

In the foregoing, electronic devices including PIFA type antennas according to various exemplary embodiments of the present disclosure and wireless signal transmitting/receiving devices thereof have been described with reference to the accompanying drawings and specific terms have been used. However, the drawings and terms have been used in a general sense merely for easily describing various exemplary embodiments of the present disclosure and for helping understanding thereof and the present disclosure is not limited to the above-described exemplary embodiments.

**Claims**

**1.** An electronic device comprising:

    a Planar Inverted-F Antenna, PIFA, type antenna (10) which is transmitting or receiving a wireless signal;
    a wireless communication unit for processing the transmitted or received wireless signal;
    a printed circuit board (3000), wherein the wireless communication unit is mounted on the printed circuit board and wherein the printed circuit board includes a ground area (360);

a power feeding pad (320) positioned on the printed circuit board (3000), electrically connected with a signal transmitting/receiving terminal of the wireless communication unit, and connected with a power feeding section (12) of the PIFA type antenna (10) when the PIFA type antenna (10) is equipped in the electronic device;

a conductive case (3100);

a ground pad (330) positioned on the conductive case (3100) of the electronic device, the conductive case being electrically connected with the ground area (360), and the ground pad being electrically connected with a ground section (33) of the PIFA type antenna (10) when the PIFA type antenna (10) is equipped in the electronic device; and

a connection section which forms an electric route between the power feeding pad (320) and the ground pad (330),

wherein the connection section is configured to electrically connect the power feeding pad (320) and the signal transmitting/receiving terminal of the wireless communication unit to the ground area (360).

2. The electronic device as claimed in claim 1, wherein the power feeding pad (320), and the connection section are formed in a fill-cut region (1010) of the printed circuit board which is formed by removing a conductive layer.

3. The electronic device as claimed in claim 1, wherein the conductive case is connected with the ground area (360) of the printed circuit board through at least one hole (361) by a screw fastened to the at least one hole (361).

## Patentansprüche

1. Elektronische Vorrichtung, umfassend:

eine Antenne vom Planar-Inverted-F-Typ, PIFA-Typ, (10), die ein Drahtlossignal sendet oder empfängt;

eine drahtlose Kommunikationseinheit zum Verarbeiten des gesendeten oder empfangenen Drahtlossignals;

eine Leiterplatte (3000), wobei die drahtlose Kommunikationseinheit auf der Leiterplatte montiert ist und wobei die Leiterplatte eine Massefläche (360) beinhaltet;

einen auf der Leiterplatte (3000) positionierten Stromanspeisepunkt (320), der elektrisch mit einem Signalsende-/-empfangsanschluss der drahtlosen Kommunikationseinheit verbunden ist und der mit einem Stromzufuhrabschnitt (12) der Antenne vom PIFA-Typ (10) verbunden ist, wenn die Antenne vom PIFA-Typ (10) in der elektronischen Vorrichtung eingebaut ist;

ein leitfähiges Gehäuse (3100);

einen Massepunkt (330), der auf dem leitfähigen Gehäuse (3100) der elektronischen Vorrichtung positioniert ist, wobei das leitfähige Gehäuse elektrisch mit der Massefläche (360) verbunden ist und der Massepunkt elektrisch mit einem Masseabschnitt (33) der Antenne vom PIFA-Typ (10) verbunden ist, wenn die Antenne vom PIFA-Typ (10) in der elektronischen Vorrichtung eingebaut ist; und

einen Verbindungsabschnitt, der einen Strompfad zwischen dem Stromanspeisepunkt (320) und dem Massepunkt (330) bildet,

wobei der Verbindungsabschnitt dazu konfiguriert ist, den Stromanspeisepunkt (320) und den Signalsende-/-empfangsanschluss der drahtlosen Kommunikationseinheit elektrisch mit der Massefläche (360) zu verbinden.

2. Elektronische Vorrichtung nach Anspruch 1, wobei der Stromanspeisepunkt (320) und der Verbindungsabschnitt in einem Füllausschnittbereich (1010) der Leiterplatte gebildet sind, der durch Entfernen einer leitfähigen Schicht gebildet wird.

3. Elektronische Vorrichtung nach Anspruch 1, wobei das leitfähige Gehäuse mit der Massefläche (360) der Leiterplatte durch mindestens ein Loch (361) durch eine Schraube verbunden ist, die an dem mindestens einen Loch (361) befestigt ist.

## Revendications

1. Dispositif électronique comprenant :

une antenne de type antenne plane en F inversé, PIFA, (10) qui émet ou reçoit un signal sans fil ;

une unité de communication sans fil destinée à traiter le signal sans fil émis ou reçu ;

une carte de circuit imprimé (3000), ladite unité de communication sans fil étant montée sur la carte de circuit imprimé et ladite carte de circuit imprimé comprenant une zone de mise à la terre (360) ;

un plot d'alimentation électrique (320) positionné sur la carte de circuit imprimé (3000), raccordé électriquement à une borne d'émission/réception de signal de l'unité de communication sans fil, et raccordé à une section d'alimentation électrique (12) de l'antenne de type PIFA (10) lorsque l'antenne de type PIFA (10) est installée dans le dispositif électronique ;

un boîtier conducteur (3100) ;

un plot de mise à la terre (330) positionné sur le boîtier conducteur (3100) du dispositif électronique, le boîtier conducteur étant raccordé électriquement à la zone de mise à la terre (360), et le plot de mise à la terre étant raccordé électriquement à une section de mise à la terre (33) de l'antenne de type PIFA (10) lorsque l'antenne de type PIFA (10) est installée dans le dispositif électronique ; et

une section de raccord qui forme un chemin électrique entre le plot d'alimentation électrique (320) et le plot de mise à la terre (330),

ladite section de raccord étant conçue pour raccorder électriquement le plot d'alimentation électrique (320) et la borne d'émisssion/réception de signal de l'unité de communication sans fil à la zone de mise à la terre (360).

2. Dispositif électronique selon la revendication 1, ledit plot d'alimentation électrique (320) et ladite section de raccord étant formés dans une zone de découpe de remplissage (1010) de la carte de circuit imprimé qui est formée en enlevant une couche conductrice.

3. Dispositif électronique selon la revendication 1, ledit boîtier conducteur étant raccordé à la zone de mise à la terre (360) de la carte de circuit imprimé à travers au moins un trou (361) par une vis fixée à l'au moins un trou (361).

[Fig. 1]

100

WIRELESS COMMUNICATION UNIT

CONTROL UNIT

[Fig. 2]

200

WIRELESS COMMUNICATION UNIT

CONTROL UNIT

[Fig. 3]

[Fig. 4]

[Fig. 5]

[Fig. 6]

[Fig. 7]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013234897 A1
- KR 20080058736 A
- US 6255994 B1
- US 2012229346 A1

**Non-patent literature cited in the description**

- **KIN-LU WONG et al.** DIVERSITY DUAL-BAND PLANAR INVERTED-F ANTENNA FOR WLAN OPERATION. *MICROWAVE AND OPTICAL TEHCNGOLGY LETTERS,* August 2003, vol. 38 (3